## Europäisches Patentamt

## European Patent Office

## Office européen des brevets

(19)

(11) Veröffentlichungsnummer : **0 044 904**
**B1**

(12) **EUROPÄISCHE PATENTSCHRIFT**

(45) Veröffentlichungstag der Patentschrift :
09.10.85

(51) Int. Cl.⁴ : **G 05 D 23/02**

(21) Anmeldenummer : **81102201.1**

(22) Anmeldetag : **24.03.81**

(54) **Thermostat zur Regelung eines Heizkörperventils.**

(30) Priorität : **29.07.80 DE 3028658**

(43) Veröffentlichungstag der Anmeldung :
**03.02.82 Patentblatt 82/05**

(45) Bekanntmachung des Hinweises auf die Patenterteilung : **09.10.85 Patentblatt 85/41**

(84) Benannte Vertragsstaaten :
**AT CH DE FR GB IT LI SE**

(56) Entgegenhaltungen :
**EP-A- 0 000 878**
**DE-A- 2 158 950**
**DE-B- 2 064 019**
**Die Akte enthält technische Angaben, die nach dem Eingang der Anmeldung eingereicht wurden und die nicht in dieser Patentschrift enthalten sind.**

(73) Patentinhaber : **Wella Aktiengesellschaft**
**Berliner Allee 65**
**D-6100 Darmstadt (DE)**

(72) Erfinder : **Beer, Erich**
**Bachstrasse 38**
**D-6418 Hünfeld (DE)**
Erfinder : **Ebert, Eberhard**
**Stoppelbergstrasse 19**
**D-6418 Hünfeld (DE)**

Jouve, 18, rue St-Denis, 75001 Paris, France

## Beschreibung

Die Erfindung betrifft einen Thermostaten zur Regelung eines Heizkörperventils, der aus einem einen Befestigungsflansch aufweisenden Aufstecksockel, einem darin einschraubbar gehaltenen Drehknopf, dessen maximaler Drehbereich relativ zum Aufstecksockel zwischen zwei Endstellungen durch Anschläge begrenzt ist, und einem im Inneren des Drehknopfes angeordneten, temperaturabhängigen Ausdehnungssystem besteht, wobei der Drehknopf mit einer auslösbaren Einstell-Hilfsvorrichtung versehen ist, die bei einem vorbestimmten Sollwert die Drehung des Drehknopfes blockiert und die eine unter Einwirkung einer Feder stehende und in einer auf dem äußeren Umfang des Drehknopfes befindlichen Längsnut in radialer Richtung bewegliche Entarretierungstaste mit radial vorspringender Nase aufweist.

Es ist bereits ein thermostatisch geregeltes Heizkörperventil mit einem Drehgriff zur Temperatureinstellung und einem Einstellbereich von höchstens etwa einer Umdrehung bekannt (EP-A-0 000 878), das eine bei einer vorgegebenen, von den Drehendlagen verschiedenen Drehstellung oder einem vorbestimmten Sollwert wirksame, die Drehung zunehmend erschwerende und/oder blockierende, aber auslösbare Einstell-Hilfsvorrichtung besitzt. Die Einstell-Hilfsvorrichtung besteht aus einem drehfest mit einem undrehbaren Bauteil des Ventils verbundenen, ortsfesten Vorrichtungsteil und einem drehfest mit dem Drehgriff verbundenen Vorrichtungsteil. Eines dieser Vorrichtungsteile besitzt mindestens eine radiale Erhebung, die in der Blockierungsstellung mit einem Anschlag des anderen Vorrichtungsteils zusammenwirkt, wobei der Anschlag oder das daran anliegende eine Vorrichtungsteil mittels eines Auslösers in eine wirkungslose Stellung bringbar ist. Der Auslöser ist als federbelasteter Druckknopf ausgebildet und verschiebbar am Drehgriff gelagert.

Aufgabe der Erfindung ist es, die bekannte Anordnung weiter zu verbessern und mit Hilfe einer Einstell-Hilfsvorrichtung eine stufenweise, fühlbare und akustisch wahrnehmbare Einstellung des Thermostaten mit Temperaturdifferenzen von vorzugsweise 1 °C zu ermöglichen. Ferner soll bei einem vorgegebenen Temperaturwert das Weiterdrehen des Drehknopfes in Richtung höherer Temperaturen blockiert und ein einfaches und schnelles Einsetzen der Anschläge für die Endstellungen des Drehknopfes erzielt werden. Dies wird gemäß der Erfindung auf vorteilhafte Weise dadurch erreicht, daß die durch die Kraft der sich gegen das temperaturabhängige Ausdehnungssystem abstützenden Feder radial nach außen gedrückte Entarretierungstaste des Drehknopfes eine radial nach außen vorspringende Nase mit sägezahnförmigem Querschnitt trägt, die mit entsprechend ausgebildeten, am Innenumfang eines koaxialen, hohlzylindrischen Fortsatzes des Aufstecksockels angeordneten, keilförmigen Längsnuten rastend zusammenwirkt, von denen wenigstens eine als Arretierungsnut mit entsprechend ausgebildetem sägezahnförmigem Querschnitt ausgebildet ist, wobei die Flanken beider sägezahnförmigen Querschnitte derart geformt sind, daß bei gegenseitigem Eingriff beim Drehen des Drehknopfes von größeren zu kleineren Temperatursollwerten keine Begrenzung erfolgt, während beim entgegengesetzten Drehen eine Begrenzung des Drehbereichs hin zu höheren Temperatursollwerten erfolgt, die durch Niederdrücken der Entarretierungstaste durch Außer-Eingriff-Bringen aufgehoben wird, und daß der maximale Drehbereich des Drehknopfes wahlweise durch in radial auf den Umfang verteilte, in das Innere sich erstreckende Längsöffnungen im Bodenbereich des Aufstecksockels einsteckbare, Anschläge bildende Begrenzungsbleche einstellbar ist, die mit einer am Innenumfang des Drehknopfes ausgebildeten, radial nach innen ragenden Längsrippe zusammenwirken.

Eine solche Einstellung des maximalen Drehbereichs durch entsprechende Begrenzungsbleche ist an sich bekannt (Radiatorregler RLK 1 der Landis & Gyr AG, Zug/Schweiz).

Die erfindungsgemäße Ausbildung des Thermostaten erleichtert die Bedienung desselben und weist einfach gestaltete Bauteile auf, die sich leicht und kostengünstig herstellen und montieren lassen, so daß eine wirtschaftliche Massenfertigung möglich ist.

Weitere Fortbildungen und Ausgestaltungen der Erfindung sind in den abhängigen Ansprüchen gekennzeichnet und werden nachstehend in Verbindung mit den ein Ausführungsbeispiel darstellenden, teilweise schematisch vereinfachten Figuren der Zeichnung beschrieben. In den Figuren sind einander entsprechende Teile mit gleichen Bezugszeichen versehen, und es sind alle zum Verständnis der Erfindung nicht notwendigen Einzelheiten fortgelassen worden.

Es zeigt:

Figur 1 eine teilweise geschnittene Seitenansicht des erfindungsgemäßen Thermostaten, wobei dessen linke Hälfte einen Längsschnitt darstellt,

Figur 2 einen Schnitt entlang der Linie A-A durch die in Fig. 1 gezeigte Ausführungsform,

Figur 3 einen Schnitt entlang der Linie B-B durch die in Fig. 1 gezeigte Ausführungsform und

Figur 4 eine Aufsicht auf den Befestigungsflansch der in Fig. 1 gezeigten Ausführungsform.

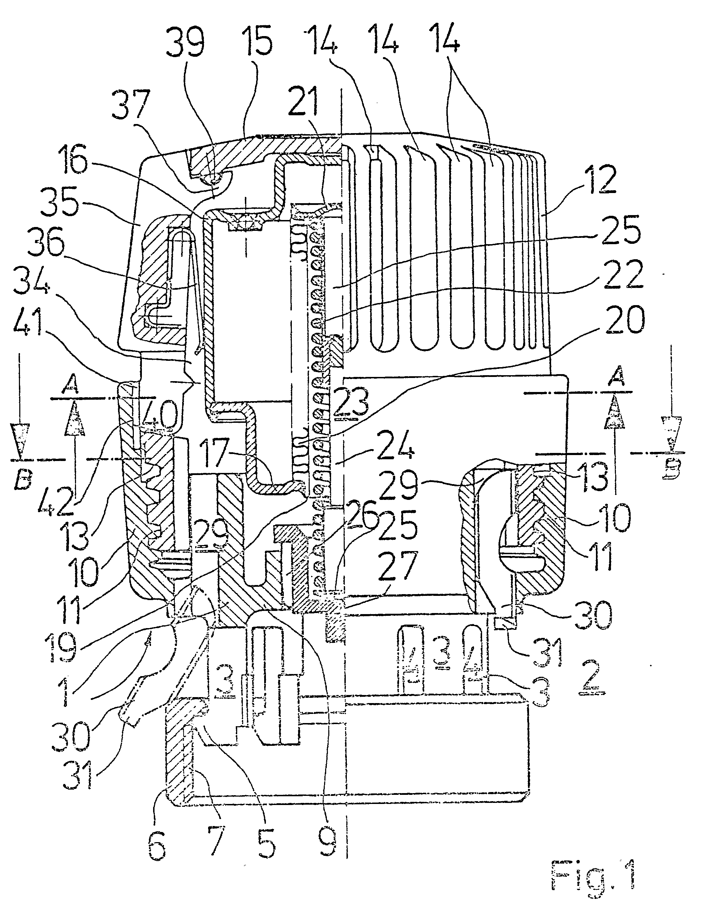

Die in Fig. 1 bis 4 gezeigte Ausführungsform besteht aus einem Aufstecksockel 1, der einen Befestigungsflansch 2 aufweist, der aus einer Vielzahl von axial vorragenden Längsrippen 3 gebildet wird. Zwischen diesen Längsrippen 3 sind Durchlüftungsschlitze 4 angeordnet. Die freien Enden der Längsrippen 3 tragen einen radial nach außen vorstehenden Kragen 5, hinter dem eine gerändelte Überwurfmutter 6 drehbar angeordnet ist. Die Überwurfmutter 6 besteht aus Metall und weist ein Innengewinde 7, auf mit dessen Hilfe der Thermostat auf ein nicht dargestelltes federbelastetes Heizkörperventil aufgeschraubt werden kann. Der Aufstecksockel 1 weist einen bodenbereich 9 auf, auf dessen vom Befestigungsflansch 2 entfernt liegender Seite sich ein koaxialer hohlzylindrischer Fortsatz 10 mit einem zweigängigen Innengewinde 11 anschließt. Jeder Gang dieses zweigängigen Innengewindes weist eine unterschiedliche Breite auf. Ein im wesentlichen zylindrischer Drehknopf 12 weits ein entsprechend ausgebildetes Außengewinde 13 auf, mit dem dieser in das Innengewinde 11 des koaxialen hohlzylindrischen Fortsatzes eingeschraubt ist. Durch die unterschiedliche Gestaltung beider Gänge kann der Drehknopf 12 nur in eine bestimmte Stellung in den koaxialen hohlzylindrischen Fortsatz 10 eingeschraubt werden. Ein Vertauschen um 180° ist somit verhindert. Der Drehknopf 12 weist Längsschlitze 14 auf, durch die Luft zirkulieren kann. Auf der Stirnseite 15 des Drehknopfes 12 sind Zahlen aufgebracht, die die Temperatureinstellung erleichtern soll.

Innerhalb des Drehknopfes 12 ist ein temperaturabhängiges Ausdehnungssystem 16 angeordnet, das mit einer Flüssigkeit gefüllt ist. Dessen den Befestigungsflansch 2 zugewandte Stirnseite 17 weist eine axiale Öffnung 19 auf, die sich axial nach innen erstreckt und die von einem aus fünfundzwanzig Wellen bestehenden Faltenbalg 20 an ihrer Mantelfläche gebildet wird. Bei Zunahme der Temperatur dehnt sich die Flüssigkeit aus und versucht ihr Volumen zu vergrößern. Dadurch wird das freie Ende 21 des Faltenbalges 20 in der in Fig. 1 gezeigten Stellung nach unten bewegt. In der Öffnung 19 ist ein gegen die Kraft einer Schraubenfeder 22 teleskopartig ineinanderschiebbarer Druckstift 23 angeordnet. Der Druckstift 23 besteht aus einem Bolzen 24, der in die Hülse 25 einschiebbar ist. Der teleskopartig ineinanderschiebbare Druckstift wirkt als Überdrucksicherung im Falle, daß zu hohe Temperaturen auftreten und daß das durch den Druckstift 23 zu steuernde nicht dargestellte federbelastete Heizungsventil bereits geschlossen ist.

Das aus dem Faltenbalg 20 herausragende Ende 25 drückt auf einen in einer axialen Durchgangsöffnung 26 des Bodenbereiches 9 im Aufstecksockel 1 axial verschiebbar geführten Druckstößel 27, der wiederum den nicht dargestellten Ventilschaft eines Heizkörperventils betätigt.

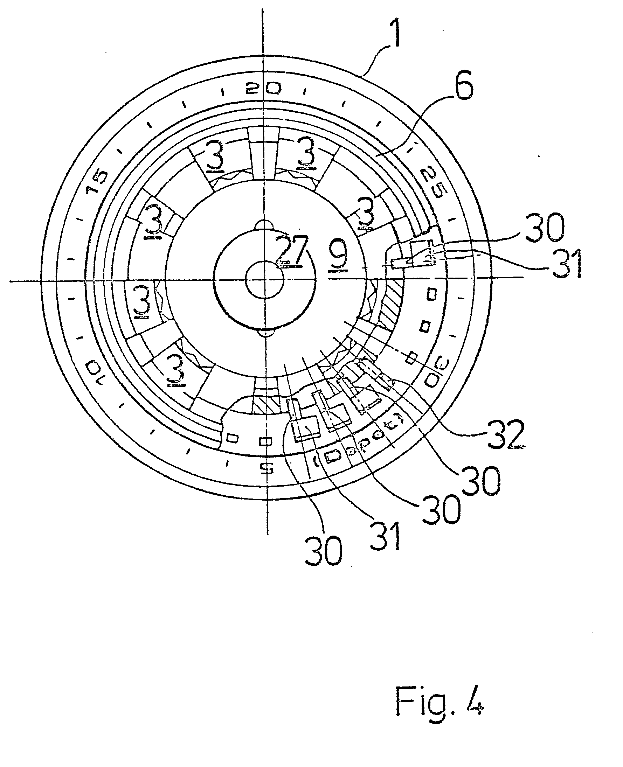

Der Bodenbereich 9 des Aufstecksockels 1 weist radial auf den umfang verteilte, sich in das Innere erstreckende schlitzförmige Längsöffnungen 29 auf, in die zwei erste Begrenzungsbleche 30 einsteckbar sind. Fig. 1 zeigt in seiner rechten Hälfte ein bereits völlig eingeschobenes erstes Begrenzungsblech 30, während die linke Hälfte ein erstes Begrenzungsblech 30 zeigt, wie es gerade in die Längsöffnung 29 eingeschoben wird. Hieraus ist ersichtlich, daß diese ersten Begrenzungsbleche auch im auf ein nicht dargestelltes Heizkörperventil montierten Zustand eingeschoben werden können. Damit diese beiden ersten Begrenzungsbleche 30 jederzeit wieder herausgenommen werden können und in ein anderes schlitzförmiges Längsloch 29 geschoben werden können, besitzt es an seinem nach außen ragenden Ende ein leicht faßbares Kopfstück, das ein um 90° abgewinkeltes Ende 31 aufweist. Diese beiden ersten Begrenzungsbleche 30 begrenzen den ersten Drehbereich des Drehknopfes 12. Jeder schlitzförmigen Längsöffnung 29 entspricht ein bestimmter Temperatursollwert. Der Anwender kann nun wahlweise einen bestimmten Temperaturbereich auswählen, wobei er durch Einstecken der Begrenzungsbleche 30 in das zugeordnete schlitzförmige Längsloch 29 den entsprechenden untersten und obersten Temperatursollwert vorgeben kann. Temperatursollwerte darüber oder darunter sind durch einfaches Verdrehen des Drehknopfes nicht einstellbar. Hierzu sind die Positionen der Begrenzungsblechezu verändern. Wie Fig. 4 zeigt ist eine Temperaturskala auf der dem Befestigungsflansch 2 zugewandten Seite des Aufstecksockels 1 angebracht, so daß das Einstellen des untersten und obersten jeweils zulässigen Temperatursollwertes erleichtert wird. Fig. 4 zeigt weiterhin in den mit der Bezeichnung « Depot » versehenen Bereich zwei weitere erste Begrenzungsstifte 30, die zur Reserve in zwei außerhalb des Drehbereiches liegenden schlitzförmigen Längslöchern 29 eingesteckt sind.

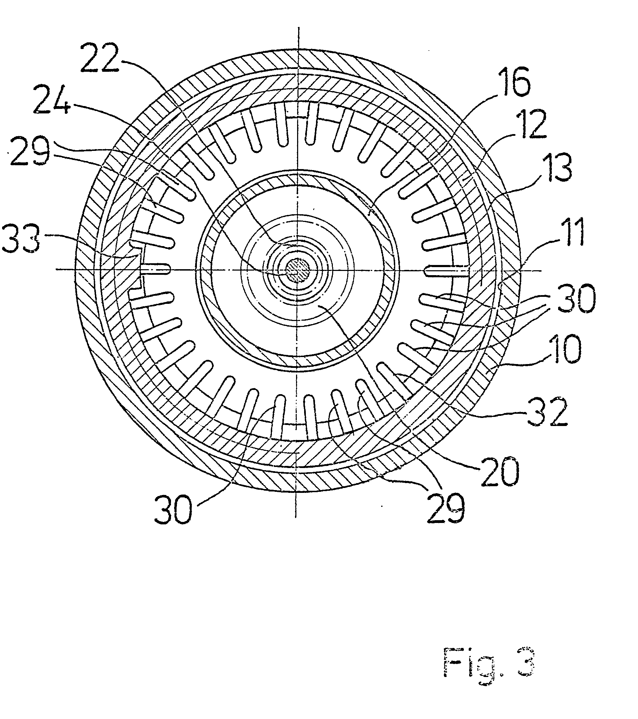

Sollte der Anwender vergessen entsprechende erste Begrenzungsbleche 30 in die schlitzförmigen Längslöcher 29 einzusetzen, so ist werkseitig ein zweites Begrenzungsblech 32 in ein schlitzförmiges Längsloch 29 bei etwa 31 °C eingeschoben, das keinen leicht fassbaren Kopf aufweist. Dieses zweite Begrenzungsblech 32 ist nur durch ein Spezialwerkzeug herausziehbar. Hierdurch wird verhindert, daß der Drehknopf 12 ganz aus dem Innengewinde 11 herausgedreht wird. Dieses Begrenzungsblech 32 wird nach erfolgter Montage des Thermostaten werkseitig eingesetzt, so daß eine spätere Demontage, z. B. ein Diebstahl, wirksam verhindert werden kann. Die Drehbegrenzung erfolgt hier durch Zusammenwirken der Begrenzungsbleche 30 bzw. 32 mit einer am Innenumfang des Drehknopfes 12 ausgebildeten radial nach innen ragenden Längsrippe 33, wie auf Fig. 3 besser ersichtlich.

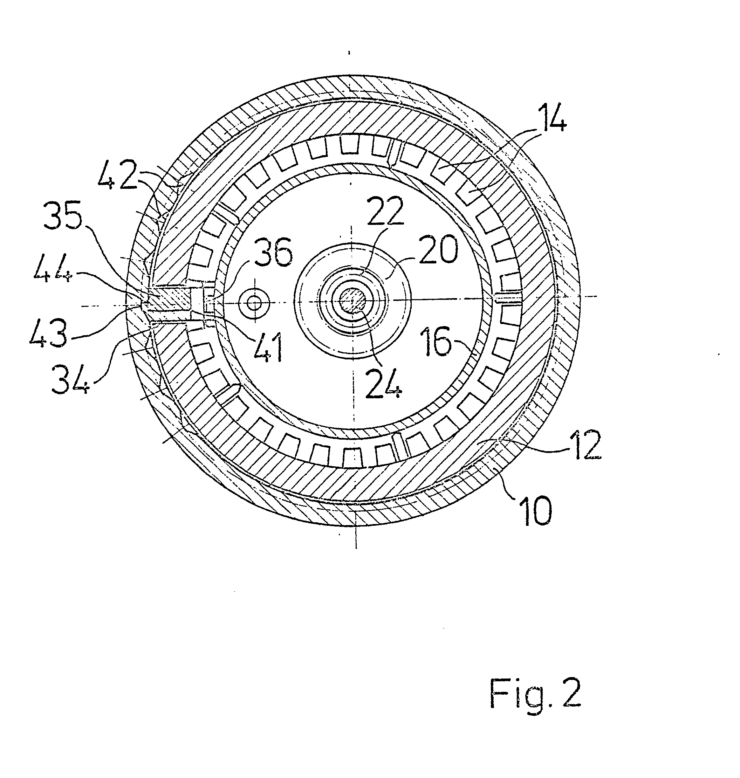

Wie aus Fig. 4 ersichtlich, weist der Drehknopf 12 auf seinem äußeren Umfang einen in einer Längsnut 34 in radialer Richtung beweglich gelagerte Entarretierungstaste 35 auf, die durch die Kraft einer sich gegen das temperaturabhängige Ausdehnungssystem 16 abstützenden gebogenen Feder 36 radial nach außen gedrückt wird, wie aus Fig. 1 in Verbindung mit Fig. 2 besser ersichtlich. Die Entarretierungstaste 35 weist an ihrem vom Befestigungsflansch 6 entfernt liegenden Ende einen radial nach innen vorragenden gabelförmigen Vorsprung 37 auf, der sich gegen eine entsprechend geformte Erhebung 39 gelenkig abstützt, die an der Innenwand der Stirnseite 15 am Drehknopf 12 ausgebildet ist.

Das andere dem Befestigungsflansch 2 zugewandte Ende 40 der Entarretierungstaste 35 trägt eine radial nach außen vorspringende Nase 41 mit sägezahnförmigem Querschnitt. Am Innenumfang des koaxialen hohlzylindrischen Fortsatzes sind gleichmäßig verteilte keilförmige Längsnuten 42 angeordnet, die mit der radial nach außen vorspringenden Nase 41 der Entarretierungstaste 35 zusammenwirken. Wird der Drehknopf 12 verdreht, so gleitet die nase 41 über die Seitenflanken der keilförmigen Längsnuten 42, die durch die bogenförmig geformte Feder 36 immer angedrückt bleibt. Hierdurch wird eine rastende Drehbewegung erreicht, wodurch eine periodisch mit der Drehbewegung sich ändernte Schwergängigkeit und Leichtgängigkeit abwechselt. Dies ist bei der Drehbewegung zu spüren und akustisch zu hören. Eine Verdrehung um eine Nutenteilung entsprechend einer Temperaturdifferenz von 1° ist somit akustisch wahrnehmbar. Eine zusätzliche optische Wahrnehmung ist hierfür nicht unbedingt erforderlich. Dies ist ein Vorteil für ungünstig plazierte Thermostate, deren Stirnseite 15 mit der aufgebrachten Skala durch ungünstige Beleuchtung schlecht erkennbar ist.

Eine dieser keilförmigen Längsnuten 42 ist als eine Arretierungsnut 43 ausgebildet, wie aus Fig. 2 besser ersichtlich. Diese Arretierungsnut sowie die Nase 41 weisen einen gleichermaßen aufeinanderabgestimmten sägezahnförmigen Querschnitt auf, wobei die steilere Flanke 44 in Richtung zu kleineren Temperatursollwerten zeigt, während die flachere Flanke in Richtung auf größere Temperatursollwerte zeigt. Hierdurch wird erreicht, daß beim Drehen des Drehknopfes 12 von größeren zu kleineren Temperatursollwerten keine Begrenzung beim Einrasten der Nase 41 in die Arretierungsnut 43 erfolgt, während bei Entgegengesetzem Drehen in Richtung zu größeren Temperatursollwerten eine Begrenzung des Drehbereiches erfolgt, die erst durch Niederdrücken der Entarretierungstaste 35 aufgehoben wird, wobei die Nase 41 und die Arretierungsnut 43 außer Eingriff kommen. Die Arretierungsnut 43 ist vorzugsweise einem Temperatursollwert von 20° zugeordnet. Hierdurch ergibt sich als Vorteil, daß Energie eingespart werden kann, weil ein unbeabsichtigtes Einstellen des Erfindungsgemäßen Thermostaten auf höhere Temperatursollwerte als z. B. 20° verhindert wird. Dies ist besonders für solche Benutzer von Vorteil, die z. B. morgens die Thermostate ihrer Heizungsventile aufdrehen und dann für viele Stunden außerhalb ihrer geheizten Wohnung sich aufhalten. War hierbei versehentlich ein zu hoher Temperatursollwert z. B. 25°, eingestellt worden, so war anschließend die Wohnung viel zu stark geheizt, was gar nicht erwünscht war. Diese Probleme entstehen vor allen Dingen für Personen, die eine Brille tragen müssen, um die Skala der Temperatursollwerte auf der Stirnseite 15 jeweils lesen zu können, jedoch die Brille nicht immer zur Hand haben. Durch die akustischen Rastsignale kann der Benutzer je Grad Temperaturdifferenz einen separaten akustischen Ton wahrnehmen und so die Größe der zu verstellenden Temperaturdifferenz erkennen.

Bei einer nicht dargestellten Ausführungsform sind die Innenseiten der schlitzförmigen Längsöffnungen 29 im Bodenbereich 9 des Aufstecksockels 1 von einer dünnen Wand verschlossen, die beim erstmaligen Einstecken eines Begrenzungsbleches 30 bzw. 32 von deren Vorderem Ende durchstossen werden. Hierdurch wird erreicht, daß der Innenraum des Thermostaten von den Luftströmungen im Bereich des Heizkörperventils entkoppelt ist. Zwischen den Längsrippen 3 sind Durchlüftungsschlitze 4 gebildet, durch die Luft strömen kann, wodurch der Wärmefluß vom Heizkörperventil zum Thermostaten noch mehr verringert wird. Außerdem wird ein wärmeisolierendes Material, vorzugsweise Kunststoff, für den Aufstecksockel 1 und den Druckstössel 27 verwendet, um diesen Wärmefluß noch stärker zu reduzieren, so daß die Rückwirkung von der Temperatur des Heizungsvorlaufes auf die zu regelnde Raumtemperatur möglichst gering ist.

Die Begrenzungsbleche 30 und 32 sind in Längsrichtung sichelförmig geformt, wobei die konkave Seite radial aussen zu liegen kommt. Hierdurch wird das Einstecken bzw. Herausnehmen aus der zugehörigen schlitzförmigen Längsöffnung 29 erleichtert. Es kann der Drehbereich neu eingestellt werden, ohne daß der Thermostat von dem Heizkörperventil abgenommen werden muß. Bei der obenbeschriebenen Ausführungsform kann der Drehbereich durch Einstecken von ersten Begrenzungsblechen 30 auf Temperatursollwerte zwischen 5° und 26° eingestellt werden. Sind keine Begrenzungsbleche 30 gesetzt, so erfolgt die obere begrenzung durch die eine Seite des werkseitig gesetzten Begrenzungsbleches 32, während der untere Temperatursollwert von der anderen Seite des gleichen zweiten Begrenzungsbleches 32 bzw. vom vollständig eingeschraubten Aussengewinde 13 der Drehkappe 12 begrenzt wird.

**Patentansprüche**

1. Thermostat zur Regelung eines Heizkörperventils, bestehend aus einem einen Befestigungsflansch (2) aufweisenden Aufstecksockel (1), einem darin einschraubbar gehaltenen Drehknopf (12), dessen maximaler Drehbereich relativ zum Aufstecksockel zwischen zwei Endstellungen durch Anschläge begrenzt ist, und einem im Inneren des Drehknopfes angeordneten, temperaturabhängigen Ausdehnungssystem (16), wobei der Drehknopf mit einer auslösbaren Einstell-Hilfsvorrichtung versehen ist, die bei einem vorbestimmten Sollwert die Drehung des Drehknopfes blokkiert und die eine unter Einwirkung einer Feder (36) stehende und in einer auf dem äußeren Umfang des Drehknopfes befindlichen Längsnut in radialer Richtung bewegliche Entarretierungstaste (35) mit radial vorspringender Nase aufweist, dadurch gekennzeichnet, daß die durch die Kraft der sich gegen das temperatur-abhängige Ausdehnungssystem (16) abstützenden Feder (36) radial nach außen gedrückte Entarretierungstaste (35) des Drehknopfes (12) eine radial nach außen vorspringende Nase (41) mit sägezahnförmigen Querschnitt trägt, die mit entsprechend ausgebildeten, am Innenumfang eines koaxialen, hohlzylindrischen Fortsatzes (10) des Aufstecksockels (1) angeordneten, keilförmigen Längsnuten (42, 43) rastend zusammenwirkt, von denen wenigstens eine als Arretierungsnut (43) mit entsprechend ausgebildetem sägezahnförmigem Querschnitt ausgebildet ist, wobei die Flanken (44) beider sägezahnförmigen Querschnitte derart geformt sind, daß bei gegenseitigem Eingriff beim Drehen des Drehknopfes von größeren zu kleineren Temperatursollwerten keine Begrenzung erfolgt, während beim entgegengesetzten Drehen eine Begrenzung des Drehbereichs hin zu höheren Temperatursollwerten erfolgt, die durch Niederdrücken der Entarretierungstaste (35) durch Außer-Eingriff-Bringen aufgehoben wird, und daß der maximale Drehbereich des Drehknopfes (12) wahlweise durch in radial auf den Umfang verteilte, in das Innere sich erstreckende Längsöffnungen (29) im Bodenbereich des Aufstecksockels (1) einsteckbare, Anschläge bildende Begrenzungsbleche (30, 32) einstellbar ist, die mit einer am Innenumfang des Drehknopfes (12) ausgebildeten, radial nach innen ragenden Längsrippe (33) zusammenwirken.

2. Thermostat nach Anspruch 1, dadurch gekennzeichnet, daß die Arretierungsnut (43) einem Temperaturbereich zwischen 18 °C und 22 °C, vorzugsweise 20 °C, zugeordnet ist und daß der tangentiale Abstand zweier keilförmiger Längsnuten (42, 43) einer Temperaturdifferenz von etwa 1 °C entspricht (Fig. 4).

3. Thermostat nach Anspruch 1 oder 2, dadurch gekennzeichnet, daß das vom Befestigungsflansch (2) entfernt liegende Ende der Entarretierungstaste (35) einen radial nach innen ragenden, gabelförmigen Vorsprung (37) aufweist, der sich gegen eine entsprechend geformte Erhebung (39) der Stirnseite (15) des Drehknopfes (12) gelenkig abstützt, während dessen anderes, dem Befestigungsflansch (2) zugewandtes Ende (40) sich in Betriebsstellung gegen die Innenseite des die keilförmigen Längsnuten (42, 43) tragenden, koaxialen hohlzylindrischen Fortsatzes (10) des Aufstecksockels (1) abstützt (Fig. 1).

4. Thermostat nach Anspruch 1, dadurch gekennzeichnet, daß zwei Drehbereiche vorgesehen sind, von denen der erste Drehbereich durch zwei wahlweise in die schlitzförmig ausgebildeten Längsöffnungen (29) im Bodenbereich einsteckbare erste Begrenzungsbleche (30) gebildet wird, die an ihrem dem Befestigungsflansch (2) zugewandten Ende ein leicht faßbares Kopfstück, vorzugsweise ein abgewinkeltes Ende (31), aufweisen, während der den ersten Drehbereich überdeckende zweite Drehbereich durch zwei Anschläge gebildet wird, von denen wenigstens einer durch ein kein leicht faßbares Kopfstück aufweisendes, nicht ohne Spezialwerkzeug entfernbares zweites Begrenzungsblech (32) gebildet ist, das ein unbefugtes Abschrauben des Drehknopfes (12) vom Aufstecksockel (1) verhindert (Fig. 4).

5. Thermostat nach Anspruch 4, dadurch gekennzeichnet, daß die ersten und/oder das zweite Begrenzungsblech (30, 32) in Längsrichtung derart sichelförmig geformt sind, daß in Betriebsstellung die konkave Seite radial außen zu liegen kommt (Fig. 1).

6. Thermostat nach Anspruch 1, dadurch gekennzeichnet, daß die Innenseite der schlitzförmigen Längsöffnungen (29) im Bodenbereich (9) des Aufstecksockels (1) von einer dünnen Wand verschlossen ist (Fig. 1).

**Claims**

1. Thermostat for regulating a radiator valve, comprising a mounting base (1) having a securing flange (2), a rotating knob (12) which can be screwed so as to be held therein, the maximum rotating capacity of which relative to the mounting base is limited between two end positions by means of stops, and a temperature-dependent expansion system (16) mounted in the interior of the rotating knob, the rotating knob being provided with a releasable auxiliary adjustment device, which prevents the rotation of the rotating knob at a pre-determined set value and which has an unlocking button (35) and which is acted upon by a spring (36) and which is movable in a longitudinal groove provided on the outer periphery of the rotating knob and which has a radialy protruding projection, characterised in that the unlocking button (35) of the rotating knob (12) which is pressed radially outwards by the force of the spring (36) supported against the temperature-dependent expansion system (16), supports a projection (41) which has a serrated cross-section which protrudes radially outwards and which co-operates in a locking manner with wedge-shaped longitudinal grooves (42, 43), which are formed accordingly and which are mounted on the inner periphery of a co-axial, hollow cylindrical extension (10) of the mounting base (1), and one of which at least is formed as a blocking groove (43) with a correspondingly formed serrated cross-section, the flanks (44) of both serrated cross-sections being formed in such a manner that there is no restriction when there is reciprocal engagement when turning the rotating knob from greater set temperature values to lower ones, whilst when turning in the opposite direction to higher set temperature values there is a restriction of the rotating capacity, which is overcome by depressing the unlocking button (35) by disengagement, and that the maximum rotating capacity of the rotating knob (12) can be set selectively by means of limiting plates (30, 32), which form stops, and which are insertable in longitudinal openings (29) distributed radially on the periphery, and extending into the interior of the base area of the mounting base (1), and which limiting plates co-operate with a longitudinal rib (33) which is formed on the inner periphery of the rotating knob (12) and which projects radially inwards.

2. Thermostat according to claim 1, characterised in that the blocking groove (43) is associated with a temperature range between 18 °C and 22 °C, preferably 20 °C, and that the tangential distance of both wedge-shaped longitudinal grooves (42, 43) corresponds to a temperature of approximately 1 °C (fig. 4).

3. Thermostat according to claim 1 or 2, characterised in that the end of the unlocking button (35) remote from the securing flange (2) has a fork-shaped projection (37) which protrudes inwards and which is supported pivotably against a correspondingly formed elevation (39) of the end face (15) of the rotating knob (12), whilst the other end (40) facing the securing flange (2) is supported in the operating position against the inside of the co-axial hollow cylindrical extension (10) supporting the wedge-shaped longitudinal grooves (42, 43) of the mounting base (1) (Fig. 1).

4. Thermostat according to claim 1, characterised in that two rotating capacities are provided, the first rotating capacity of which is defined by two first limiting plates (30) which are insertable selectively in the longitudinal openings (29) formed in the shape of a slit in the base area and which have an easily grippable head piece, preferably an angular end (31), at the end facing the securing flange, whilst the second rotating capacity overlapping the first rotating capacity is defined by two stops, at least one of which is formed by a second limiting plate (32) which does not have an easily grippable head piece cannot be removed without a special tool, and which prevents unauthorised unscrewing of the rotating knob (12) from the mounting base (1) (Fig. 4).

5. Thermostat according to claim 4, characterised in that the first and/or the second limiting plate (30, 32) are formed in the shape of a sickle in a longitudinal direction in such a manner that the concave side comes to rest radially outwards in the operating position (Fig. 1).

6. Thermostat according to claim 1, characterised in that the inside of the slit-shaped longitudinal openings (29) in the base area (9) of the mounting base (1) is closed by a thin wall (Fig. 1).

**Revendications**

1. Thermostat de réglage d'une soupape de radiateur, comprenant un socle de montage (1) comportant une bride de fixation (2), un bouton rotatif (12) qui y est monté par vissage, dont le domaine de rotation maximum par rapport au socle de montage est délimité entre deux positions terminales par des butées, et un système (16) pouvant se dilater en fonction de la température, placé à l'intérieur du bouton rotatif, le bouton rotatif comportant un dispositif auxiliaire de réglage déclenchable qui bloque, pour une valeur prescrite prédéterminée, la rotation du bouton rotatif et qui comporte une touche de déblocage (35) pourvue d'un ergot en saillie radiale, soumise à l'action d'un ressort (36) et mobile en direction radiale dans une rainure longitudinale se trouvant à la périphérie extérieure du bouton rotatif, caractérisé en ce que la touche de déblocage (35) du bouton rotatif (12) poussée radialement vers l'extérieur par la force du ressort (36) s'appuyant contre le système (16) se dilatant en fonction de la température, comporte un ergot (41) de section droite en dents de scie faisant saillie radialement vers l'extérieur, qui coopère avec encliquetage avec des rainures longitudinales (42, 43) cunéiformes de conformation correspondantes, se trouvant à la périphérie intérieure d'un prolongement cylindrique creux coaxial (10) du socle (1), dont l'une au moins est réalisée sous la forme d'une rainure de blocage (43) de section droite en forme de dents de scie correspondante, les flancs (44) des deux sections en dents de scie étant conformés de façon que, lors d'une prise mutuelle au moment de la rotation du bouton rotatif de valeurs de température prescrites supérieures à des valeurs inférieures, il n'y ait pas de limitation, tandis que, lorsqu'on fait tourner le bouton en sens inverse, il y ait une limitation du domaine de rotation vers les valeurs de température prescrites supérieures, que l'on peut faire cesser en enfonçant la touche de déblocage (35) par mise hors d'action, et en ce que le domaine de rotation maximum du bouton rotatif (12) peut être réglé à volonté au moyen de plaques de limitation métalliques (30, 32) constituant des butées, pouvant être insérées dans des ouvertures longitudinales (29) formées dans la zone inférieure du socle de montage (1), s'étendant à l'intérieur, réparties radialement à la périphérie, qui coopèrent avec une nervure longitudinale (33) formée à la périphérie intérieure du bouton rotatif (12), dirigée radialement vers l'intérieur.

2. Thermostat selon la revendication 1, caractérisé en ce que la rainure de blocage (43) est rattachée à un intervalle de température compris entre 18 °C et 22 °C, de préférence 20 °C, et en ce que la distance tangentielle de deux rainures longitudinales cunéiformes (42, 43) correspond à une différence de température d'environ 1 °C (figure 4).

3. Thermostat selon la revendication 1 ou 2, caractérisé en ce que l'extrémité de la touche de déblocage (35) éloignée de la bride de fixation (2) comporte une saillie fourchue (37) dirigée radialement vers l'intérieur, qui s'appuie de façon articulée contre un rehaussement (39) de la face frontale (15) du bouton rotatif (12) de forme correspondante, tandis que son autre extrémité (40) se trouvant du côté de la bride de fixation (2) s'appuie, en position de fonctionnement, contre la face intérieure du prolongement en forme de cylindre creux axial (10) du socle de montage (1) comportant des rainures longitudinales cunéiformes (42, 43) (figure 1).

4. Thermostat selon la revendication 1, caractérisé en ce qu'il comporte deux zones de rotation dont la première est formée par deux premières plaques de limitation métalliques (30) pouvant être enfoncées à volonté dans les ouvertures longitudinales (29) en forme de fentes formées dans la zone inférieure, qui comportent à leur extrémité située du côté de la bride de fixation (2) un bout facile à saisir, de préférence une extrémité (31) coudée, tandis que le second domaine de rotation chevauchant le premier domaine de rotation est formé par deux butées dont l'une au moins est formée par une seconde plaque de limitation métallique (32) ne comportant pas de bout facile à saisir, ne pouvant être retirées sans outil spécial, qui empêche un dévissage non-autorisé du bouton rotatif (12) du socle de montage (1) (figure 4).

5. Thermostat selon la revendication 4, caractérisé en ce que les premières et/ou la seconde plaque de limitation métallique (30, 32) présentent en direction longitudinale une forme de croissant telle qu'en position de fonctionnement la face concave vienne se placer radialement à l'extérieur (figure 1).

6. Thermostat selon la revendication 1, caractérisé en ce que le côté intérieur des ouvertures longitudinales en forme de fente (29) formées dans la zone inférieure (9) du socle de montage (1) est fermé par une paroi mince (figure 1).

Fig. 1

Fig. 2

Fig. 3

Fig. 4

4